# EUROPEAN PATENT APPLICATION

(11) **EP 2 456 182 A1**
(43) Date of publication of application: **23.05.2012**
(21) Application number: 10831069.9
(22) Date of filing: 18.08.2010
(51) Int. Cl.: H04M 3/42

(54) **METHOD, SYSTEM AND PARLAY X GATEWAY FOR IMPLEMENTING ADVANCED CALL**

(30) Priority: 20.11.2009 CN 200910223977
(71) Applicant: ZTE Corporation, Shenzhen, Guangdong 518057 (CN)
(72) Inventor: WU, Yan, Guangdong 518057 (CN); TAN, Xiaohua, Guangdong 518057 (CN); WU, Zhifeng, Guangdong 518057 (CN)
(74) Representative: Manitz, Finsterwald & Partner GbR
(86) International application number: PCT/CN2010/076111
(87) International publication number: WO 2011/060653

(57) **Abstract**

A method, system and PARLAY X gateway for implementing an enhanced call are provided by the present invention. The method includes the following steps: during the process of a PARLAY X gateway establishing a call, the PARLAY X gateway obtains the resource type and the resource address of the call via the call interface, and determines to play the multimedia content indicated by the resource address to the calling party or the called party according to the resource type. The present invention enables the PARLAY X gateway to support multimedia ring back tone by improving the interface function of the PARLAY X gateway, adapt to the service development and improve the user experience.

## Description

### Technical Field

The present invention relates to the fields of the telecommunication network communication and the Internet, and more especially, to a method, system and PARLAY X gateway for implementing enhanced call.

### Background of the Related Art

With the rapid development of value-added services, the service capacity open platform architecture is constantly evolving. In the previous applications, it needs to particularly focus on calculating the service download time, the use of any sound and picture, as well as interaction scheme must be well balanced with the service download time, and all current solutions are based on this premise. With the upgrading of the network capacity, that is, from 2.5G to 3G and even from 3G to the future 4G, 5G, the service can not be kept static, moreover, the rich mediumizing of the service will become an inevitable trend, such as enhanced call, enhanced conference, and so on. When the network can carry such rich media services, the service capacity open platform must provide entrance for each rich media service, otherwise it will become increasingly difficult to meet the requirements of the users, service provider (referred to as SP), content provider (referred to as CP) and the operator.

The Internet has become an integral part of people's life. The open nature of the Internet makes it be the main position in creation and promotion of new technologies and innovative applications, and the new generation Internet application Web2.0 makes the users as the content producers while also as consumers. In terms of the telecommunication industry, the way for providing application programming interface (API) is not unfamiliar. Early in the last century, the equipment manufacturers provide the corresponding API based on their own equipments to meet the early-stage computer telephony integration (referred to as CTI) application requirements. But generally speaking, it has the following disadvantages: it is internally realized based on the manufacturer's equipment; and it is closely related to the original telecommunication protocols; it is based on specific platforms and technologies which gives developers a great deal of inconvenience. The Parlay organization has done a unified standardization work for that and developed a Common Object Request Broker (scheduling) Architecture (referred to as CORBA) Open Services Architecture (referred to as OSA) API, in which the programming is unified when using various telecommunications service capabilities. However, the API call is still relatively complicated, the application can be implemented cross-platform, and it requires relatively complicated telecommunication control, the developers still need to have a considerable background of telecommunication experience. Afterwards, the organization formulated Web Service based the Parlay X API to abstract and simplify the use of telecommunication capacity by the application, and the originality and complexity nature of the telecommunication protocols and control logic are shielded, so as to further close to the IT application integration technology. Via the Web Service, the telecommunication capabilities can be naturally opened into the OSA environment to integrate with IT applications, or embedded into the service process driven by the business process management (referred to as BPM). All service developments have a tend, that is, assume that the network service interface used to open the telecommunication capabilities is the smallest granularity service assembling a variety of applications, due to the restrictions from the operators, the bottom layer capability has not fully opened, therefore, with the increase of the open degree of the telecommunication capabilities, these services inevitably require further expansion, which means to open the new capabilities and new functions such as the capabilities which previously is not opened, or the bottom layer capabilities. However, all opening aims at better aggregation. With the expansion of the smallest granularity services provided via the network server, the applications achieved through these interfaces become increasingly richer and more practical, thus the user experience is also getting better and better.

With the bandwidth increase and telecommunication development, the functions of some rich media will be no longer subject to the impact of bandwidth and speed, and gradually become regular features to be used by the peoples. For example, using a mobile phone to watch TV, listen to songs online, and the enhanced features of a number of rich media might be used during a call, for example, ring back tone sound quality continues to improve, the ringing of the called party can be a video uploaded by the calling party, and so on. With the widespread use of these rich media capabilities, in order to better expand the CP/SP application, the PARLAY X gateway should open these capabilities. Applications achieved with these interfaces will be rich and varied.

For the more commonly used value-added ring back tone services, with the development of service and networking capabilities, the ring back tone also has some multimedia extensions, such as color talk, color tone, and so on. One common characteristic of these multimedia value-added services is more personalized and has high requirements on the speed of the network. Color talk is a personalized voice value-added service and a voice service in which the calling party sets a personalized background tone for both parties in the call, and the multimedia ring tone (MRT) service is a value-added service which uses a variety of medias as the ring tone. The multimedia ring back tone is an extension of the traditional ring back tone concept, and is a service that replaces the common ring with a multimedia ring-back customized by the called user and provided by operator to the calling user. The users of Multimedia ring back tone can not only select a variety of music and sound as the ring back tone of the calling terminal, but also can provide the calling terminal that supports the multimedia with multimedia ring back tone including videos, pictures and animations. All kinds of media contents are richly presented and are able to convey the called user's personalized features, to stimulate the feelings and needs of the calling user on the services, the 3G era is expected to form the rapid transmission of multimedia ring back tone.

Although the bottom layer protocol of the PARLAY X gateway already supports ring back tones, the PARLAY X gateway can support ring back tones without modification. Since the ring tones are supported via the bottom layer protocol, the calling party sets the ring back tones in advance, during a call, it picks up a tone from the ring back tone playback server to play in the call control process, the calling process does not involve to the upper layer protocol. However, when the ring back tone has developed to the multimedia ring back tone, the existing PARLAY X gateway cannot support these features. For example, currently, when the user uses the call interface in the PARLAY X gateway to make a call, the calling party and the called party can only follow the normal call process, if the called party sets ring back tones, then the calling party can hear the ring back tones set by the called party. Even if the called party opens the functions of color tone and color talk, these functions cannot be used in the calls achieved via the PARLAY X gateway.

### Summary of the Invention

To solve the technical problem, the present invention provides a method, system and PARLAY X gateway for implementing an enhanced call to make the PARLAY X gateway support multimedia ring back tone.

In order to solve the problem, the present invention provides a method for implementing enhanced call, comprising: in the process of establishing a call via the PARLAY X gateway, the PARLAY X gateway acquires the resource type and resource address of this call via the call interface, determines to play the multimedia content indicated by the resource address to the calling party or the called party according to the resource type.

The aforementioned method might also have the following feature:
the call interface is a call notification interface of the PARLAY X gateway, and the step of the PARLAY X gateway acquiring the resource type and resource address of this call via the call interface comprises: the PARLAY X gateway parses the resource type and resource address out from the control call response message received via the call interface.

The aforementioned method might also have the following feature:
the resource type and resources address are parameters in the action structure in the call response message.

The aforementioned method might also have the following feature:
the call response message is the response message for HandleBusy, HandleNotReachable, HandleNoAnswer, HandleCalledNumber, or HandleCallEvent in the call notification interface.

The aforementioned method might also have the following feature:
The call interface is a Third Party Call interface of the PARLAY X gateway, the step of the PARLAY X gateway acquiring the resource type and resource address of this call via the call interface comprises: the PARLAY X gateway parses the resource type and resource address out from the call establishment request message received via the call establishment request interface in the third party call interface.

The aforementioned method might also have the following feature:
The resource type is used to indicate to take the multimedia content indicated by the resource address as the ring tone to play to the calling party, or as the ring tone to play to the called party; the resource address is used to indicate the address of the multimedia content.

In order to solve the aforementioned problem, the present invention also provides a system for implementing enhanced call, the system comprises a PARLAY X gateway, and a content provider or service provider, and the content provider or the service provider provides the resource type and resource address of the call to the PARLAY X gateway during the process of establishing the call via the PARLAY X gateway; the PARLAY X gateway is set to: acquire the resource type and resource address of the call through a call interface, determine to play the multimedia content indicated by the resource address to the calling party or the called party according to the resource type.

The aforementioned system might also have the following feature:
the PARLAY X gateway comprises a call control module, and the call control module is set to: when the call interface is the Call Notification interface of the PARLAY X gateway, parse the resource type and resource address out from the control call response message received from the call notification interface, the resource type and resource address are parameters in the action structure in the call response message; as well as, when the call interface is a Third Party Call interface of the PARLAY X gateway, parse the resource type and resource address out from the call establishment request message received through the call establishment request interface in the third-party call interface.

The aforementioned system might also have the following feature:
the resource type is used to indicate to take the multimedia content indicated by the resource address as a ring tone to play to the calling party, or as a ring tone to play to the called party; the resource address is used to indicate the address of the multimedia content.

In order to solve the aforementioned problem, the present invention also provides a PARLAY X gateway for implementing enhanced call, the PARLAY X gateway comprises a call control module, and the call control module is set to: in the process of the PARLAY X gateway establishing a call, acquire the resource type and resource address of the call through the call interface, determine to play the multimedia content indicated by the resource address to the calling or called party according to the resource type.

The PARLAY X gateway might also have the following feature:
the call control module is set to acquire the resource type and resource address of the call through a call interface according to the following way: when the call interface is a Call Notification interface of the PARLAY X gateway, parse the resource type and resource address out from the control call response message received from the call notification interface, the resource type and resource address are parameters in the action structure in the call response message.

The PARLAY X gateway might also have the following feature:
the call control module is set to acquire the resource type and resource address of the call through a call interface according to the following way: when the call interface is a Third Party Call interface of the PARLAY X gateway, parse the resource type and resource address out from the call establishment request message received through the call establishment request interface in the third-party call interface.

The PARLAY X gateway might also have the following feature:
the resource type is used to indicate to take the multimedia content indicated by the resource address as a ring tone to play to the caller, or as a ring tone to play to the called party; the resource address is used to indicate the address of the multimedia content.

By improving the interface functions of the PARLAY X gateway, the present invention makes the PARLAY X gateway support multimedia ring back tone, adapt to service development, and improve the user experience.

### Brief Description of Drawings

FIG. 1 is a structural diagram of a system implementing enhanced call in accordance with an embodiment;
FIG. 2 is a flow chart of a method for implementing enhanced call in accordance with an embodiment;
FIG. 3 is a flow chart for implementing enhanced call by taking the call notification interface as an example in a specific embodiment;
FIG. 4 is a flow chart for implementing enhanced call by taking the third-party call interface as an example in a specific embodiment.

### Preferred Embodiments of the Present Invention

Multimedia ring back tone has been very popular, because there are no rich media interfaces, the PARLAY X-gateway opening service capability for the SP cannot use the functions of some rich media ring back tones when processing a call. For example, user A expects the called B to display color image when dialing a call, and the color image is a video and audio section made by the user A and uploaded to the network. When the A executes the call, if it is through the normal call process, then the color image can be used; if A executes the call via an application provided by the SP, then the application uses the PARLAY X gateway interface to call the Telecom bottom layer capability, thus the call cannot use color image. Therefore, the reason of rich media extension, such as that color image cannot be used, is not because that the bottom layer capability does not support it, it is because that the PARLAY X interface does not support it. The CP/SP applications implemented with the PARLAY X interface do not support this type of rich media.

The PARLAY X gateway comprises interfaces respectively facing three directions, and in the following, the three interfaces will be described in detail:
First, the PARLAY X gateway comprises a network service interface connecting with the CP/SP and its applications, and the interface is called the North interface. The CP, SP, and their applications use telecommunication capabilities via the interface.
Second, the interface between the PARLAY X gateway and the PARLAY X management platform is known as the East interface, and the interface mainly achieves service management, authentication, charging and other functions.
Third, the interface between the PARLAY X gateway and the bottom layer telecommunication capabilities is known as the South interface which mainly achieves the protocol adaptation from the business engine to the bottom layer capabilities.

If the PARLAY X gateway needs to support multimedia ring back tone and acquire a good scalability, the call interface of the current PARLAY X gateway must be modified. The call interface modification of the present invention refers to an interface in the north interface of the PARLAY X gateway.

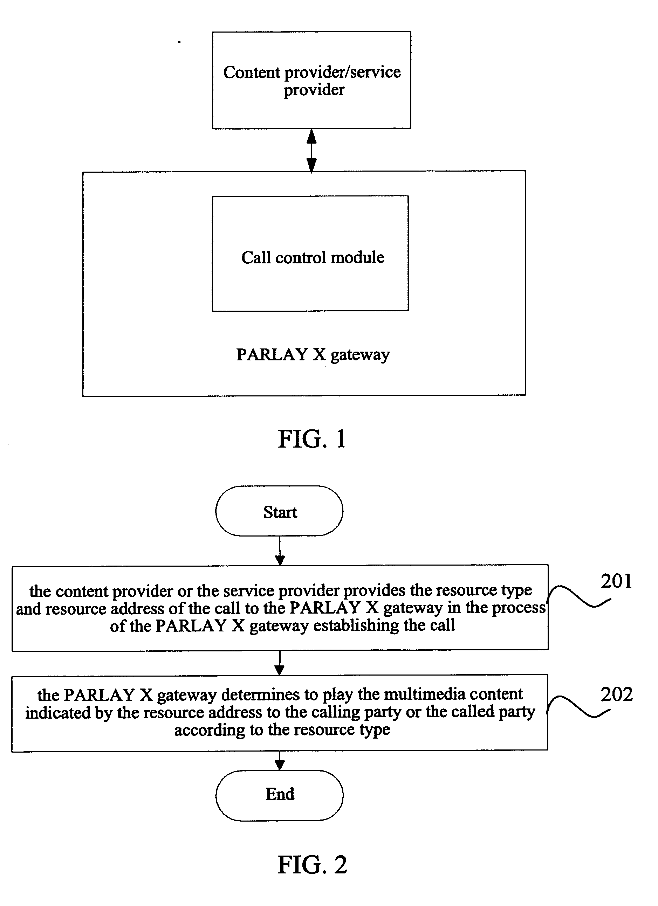

As shown in FIG. 1, the system achieving an enhanced call comprises a PARLAY X gateway, and also a content provider or service provider.
the content provider or service provider is used to provide the resource type and resource address of the call to the PARLAY X gateway in the process of establishing a call through the PARLAY X gateway;
the PARLAY X gateway is used to acquire the resource type and resource address of the call through a call interface, determine to play the multimedia content indicated by the resource address to the calling party or the called party according to the resource type.
the PARLAY X gateway comprises a call control module, which is set to: when the call interface is the Call Notification interface of the PARLAY X gateway, parse the resource type and resource address out from the control call response message received from the call notification interface. The Call response message is the response message of HandleBusy, HandleNotReachable, HandleNoAnswer, HandleCalledNumber, HandleCallEvent in the call Notification interface. The resource type and resource address are parameters in the action structure in the call response message;

The call control module is also used to, when the call interface is the Third Party Call interface of the PARLAY X gateway, parse the resource type and resource address from the call establishment request message received through the call establishment request interface in the third-party call interface.

The resource type is used to indicate to take the multimedia content indicated by the resource address as a ring tone to play to the calling party, or as a ring tone to play to the called party; the resource address is used to indicate the address of the multimedia content.

As shown in FIG. 2, the method for achieving an enhanced call comprises the following steps:
step 201, the content provider or service provider provides the resource type and the resource address of the call to the PARLAY X gateway in the process of the PARLAY X gateway establishing the call;
step 202, the PARLAY X gateway determines to play the multimedia content indicated by the resource address to the calling party or the called party according to the resource type.

The resource type and resource address of the call is added into the message provided by the content provider or service provider to the PARLAY X gateway, the relevant parameters of the call interface in the North interface of the PARLAY X gateway is modified so as to identify the resource type and resource address of the call. The PARLAY X gateway maps these two parameters to the corresponding bottom layer protocols in its bottom layer mapping module. The interface of the PARLAY X gateway might have the functionality of the multimedia ring back tone.

The call interface might be a call notification interface in the North interface or the third-party call interface. In the following, the two implementations will be described in detail.

### (I) Call Notification interface

Two parameters, resourceType and resourceAddress, are added into the Action structure in the call response message sent by the content provider or service provider to the PARLAY X gateway. The ACTION structure is the response message of the call notification interface, and the specific call notification interface comprises HandleBusy, HandleNotReachable, HandleNoAnswer, HandleCalledNumber, and HandleCallEvent. That is, the response message of the HandleBusy request can trigger the ACTION, if the ACTION structure carries the resourceType and resourceAddress, the bottom layer capability (core network or IMS capability) during a call can acquire resources via the interface (according to the parameter of resource address) and play multimedia ring tone to the called party or play multimedia ring tone to the calling party in accordance with the resource usage type (based on the parameter of resourcetype), thus to achieve enhanced user experience of the multimedia.

This action structure is used as the indication used by the call to notify the PARLAY X gateway of the next action. The Action structure is an existing structure in the message received at the North interface of the PARLAY X gateway. The Action structure already comprises fields of RoutingAddressArray, Charging, and MediaInfo.

Among them, the RoutingAddressArray indicates the to-be-called number in the call, it can be a number or a group of numbers;
Charging means the charge of the call session;
MediaInfo is the media type of the call.

The resource type (resourceType) added in the Action structure in the present invention indicates the usage form of the personalized multimedia resources, and it might be a RingMedia, AlertMedia, or other forms. Its parameter type is ResourceTypeValues, and the ResourceTypeValues is a common enumerated type that can be expanded with the business expansion. In the current service usage condition, different values of the ResouceTypeValues can indicate RingMedia or AlertMedia. The RingMedia indicates to play multimedia content such as audio, video or flash as the ring to the calling party during the call establishment; the AlertMedia indicates to take the multimedia content such as audio, video or flash as the ring when establishing the call to play to the called mobile phone.

The resourceAddress added in the Action structure in the present invention means the specific address of the multimedia resource, and it might be a link (such as URL link) or a set of links.

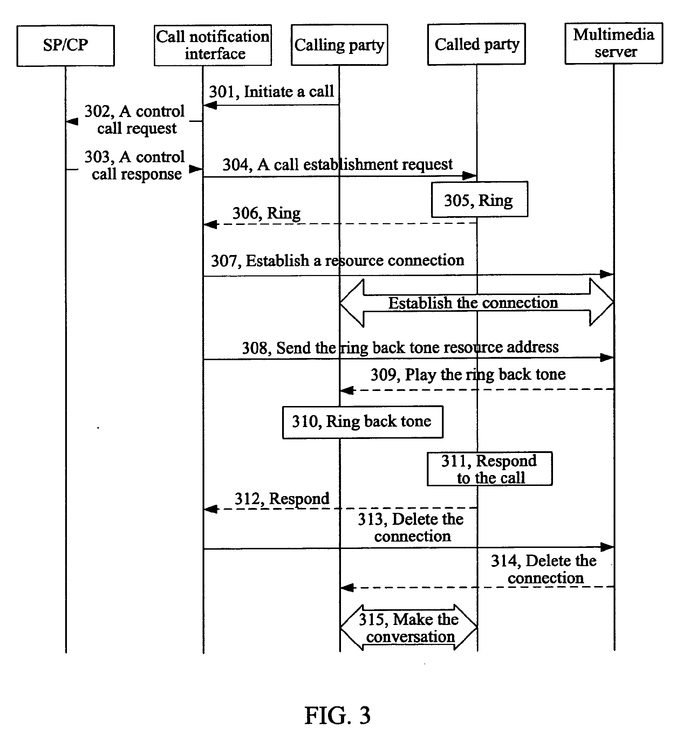

In the following, the call process implemented through the call notification interface will be described in detail. When the calling party (user A) initiates a call, it triggers the intelligent network service, and sends the session identifier (callid) to the service provider, and the service provider prompts the PARLAY X gateway to establish a call between the user A and the called party (user B). Before the user B responds to establish the call, the SP can provide personalized multimedia experience to the user A or the user B while establishing the call, such as providing multimedia ring to the user B, providing multimedia ring to the user A, or other forms. Taking providing multimedia ring tone to the user A as an example, the implementation steps are shown as FIG. 3:
step 301, when the calling party initiates a call, trigger the PARLAY X gateway;
step 302, the Call Notification interface of the PARLAY X gateway uses the handleCallEvent to inform the SP application;
step 303, the SP application adds the parameter resourceType indicated as RingMedia into the Action structure in the control call response, also adds the parameter resourceAddress to indicate the multimedia file address (such as URL link) corresponding to the ring back tone;
steps 304-306, the called party rings;
step 307, the PARLAY X gateway sends a request for establishing a link with the calling party to the media resource server via the call notification interface; the media resource server establishes a link with the calling party;
step 308, the PARLAY X gateway sends a ring back tone resource address to the media resource server through the call notification interface;
step 309, the media resource server sends the ring back tone resource data;
step 310, the calling party plays the ring back tone resource;
steps 311-312, the called party is off-hook, and returns a response to the PARLAY X gateway;
steps 313-314, the PARLAY X gateway deletes the link between the called party and the media resource server via the call notification interface, and the playing stops;
step 315, the calling party and the called party make the conversation normally.

### (II) Third Party Call interface

Two parameters, resourceType and resourceAddress, are added into the MakeCallSessionRequest sent by the content provider or the service provider to the PARLAY X gateway.

The resourceType indicates the usage form of the personalized multimedia resources, and it might be a RingMedia, AlertMedia, or other forms. Its parameter type is ResourceTypeValues, and the ResourceTypeValues is a common enumerated type that can be expanded with the business expansion. In the current service usage condition, different values of the ResouceTypeValues can indicate RingMedia or AlertMedia. The RingMedia indicates to play multimedia content such as audio, video or flash as the ring tone to the calling party during the call establishment; the AlertMedia indicates to take the multimedia content such as audio, video or flash as the ring tone when establishing the call to play to the called mobile phone.

The resourceAddress means the specific address of the multimedia resource, and it might be a link (such as URL link) or a set of links.

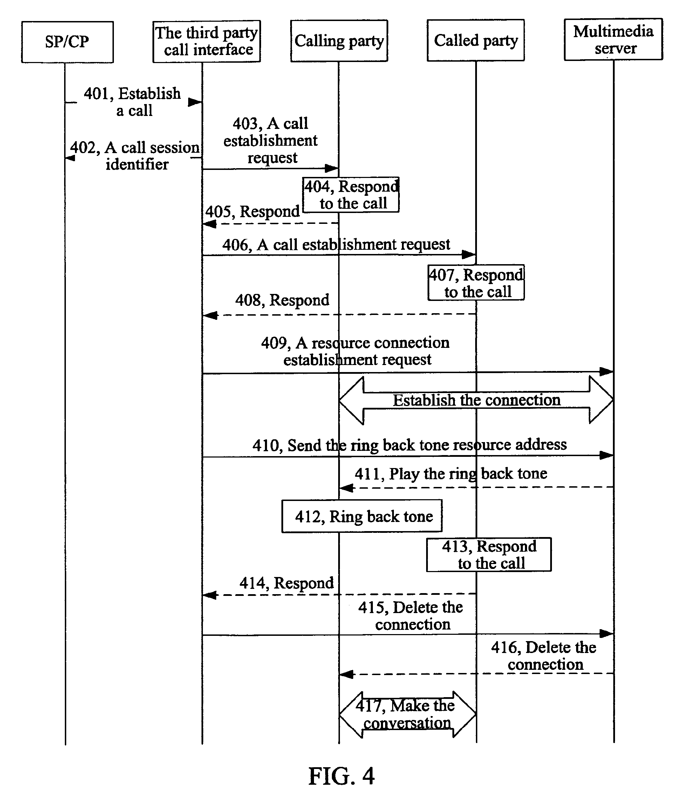

FIG. 4 is a flow chart of the function that the PARLAY X gateway uses the third-party call interface to achieve the multimedia ring tone. Through the third-party call interface, the user can use the Webpage provided by the SP to initiate a call, indicating the PARLAY X gateway to establish the call between the calling party (user A) and the called party (user B). Before the user B responds to establish the call, the SP can provide the user A with personalized multimedia experience. This specifically comprises:
step 401, the SP application initiates a call to the PARLAY X gateway, and sends a call establishment request to the third party interface of the PARLAY X gateway, and the request comprises the resourceType and the resourceAddress, and the resourceType is indicated as RingMedia; the resourceAddress indicates the multimedia file address (such as the URL link) corresponding to the ring back tone.
step 402, the PARLAY X gateway returns a response to the SP application;
step 403, the SP application create a call to the calling party;
steps 404-405, the calling party answers and responds to the call;
step 406, the PARLAY X gateway establish a call with the user B;
steps 407-408, the called party rings and responds to the call;
step 409, the PARLAY X gateway sends a request for establishing a link with the calling party to the media resource server via the call notification interface; the media resource server establishes a link with the calling party;
step 410, the PARLAY X gateway sends the ring back tone resource address to the media resource server through the call notification interface;
step 411, the media resource server sends ring back tone resource data;
step 412, the calling party plays the ring back tone resource;
steps 413-414, the called party is off-hook, and returns a response to the PARLAY X gateway;
Steps 415-416, the PARLAY X gateway deletes the link between the called party and the media resource server via the call notification interface, and the playing stops;
Step 417, the calling party and the called party make the conversation normally.

In the aforementioned method, it always takes the parameter resourceType indicating the RingMedia as an example, the PARLAY X gateway determines to play the multimedia file indicated by the resourceAddress to the calling party. In other embodiments, the parameter resourceType can also be indicated as AlertMedia, and the PARLAY X gateway determines to play the multimedia file indicated by the resourceAddress to the called party, the specific process will not be repeated here.

Although the preferred embodiments of the present invention are disclosed for the purpose of illustration, those skilled in the field should realize that there might be a variety of improvements, replacements and modifications. Therefore, the scope of the present invention is not limited to the aforementioned embodiments.

Those skilled in the field should understand that, some or all steps in the aforementioned method might be implemented by the programs instructing the related hardware tools, and the programs can be stored in a computer readable storage medium, such as read-only memory, disk or CD-ROM. Optionally, some or all steps of the aforementioned embodiment can be implemented with one or more integrated circuits. Correspondingly, each module/unit in the aforementioned embodiment might be implemented in the form of hardware or software function modules. The present invention is not limited to any specific combination of hardware and software.

### Industrial Applicability

By improving the PARLAY X gateway call interface extension and its parameters, the present invention makes the PARLAY X gateway has enhanced user personalized call experience function, comprising the enhanced personalized multimedia experience and the enhanced personalized ringing function.

## Claims

1. A method for implementing an enhanced call, comprising:
in a process of establishing a call via a PARLAY X gateway, the PARLAY X gateway acquiring a resource type and a resource address of the call via a call interface, determining to play multimedia content indicated by the resource address to a calling party or a called party according to the resource type.

2. The method of claim 1, wherein,
the call interface is a call notification interface of the PARLAY X gateway,
the step of the PARLAY X gateway acquiring the resource type and resource address of the call via the call interface comprises: the PARLAY X gateway parses the resource type and resource address out from control call response message received via the call interface.

3. The method of claim 2, wherein,
the resource type and resources address are parameters in an action structure in the call response message.

4. The method of claim 3, wherein,
the call response message is response message of HandleBusy, HandleNotReachable, HandleNoAnswer, HandleCalledNumber, or HandleCallEvent in the call notification interface.

5. The method of claim 1, wherein,
the call interface is a Third Party Call interface of the PARLAY X gateway,
the step of the PARLAY X gateway acquiring the resource type and resource address of the call via the call interface comprises: the PARLAY X gateway parsing the resource type and resource address out from call establishment request message received via a call establishment request interface in the third party call interface.

6. The method of any of claims 1 to 5, wherein,
the resource type is used to indicate to take the multimedia content indicated by the resource address as a ring tone to play to the calling party, or as a ring tone to play to the called party; the resource address is used to indicate an address of the multimedia content.

7. A system for implementing an enhanced call, comprising a PARLAY X gateway, and a content provider or a service provider; wherein,
the content provider or the service provider is set to provide a resource type and a resource address of a call to the PARLAY X gateway during a process of establishing the call via the PARLAY X gateway;
the PARLAY X gateway is set to: acquire the resource type and the resource address of the call through a call interface, determine to play multimedia content indicated by the resource address to a calling party or a called party according to the resource type.

8. The system of claim 7, wherein, the PARLAY X gateway comprises a call control module, and the call control module is set to:
when the call interface is a Call Notification interface of the PARLAY X gateway, parse the resource type and resource address out from control call response message received from the call notification interface, wherein the resource type and resource address are parameters in an action structure in the call response message; and
when the call interface is a Third Party Call interface of the PARLAY X gateway, parse the resource type and resource address out from call establishment request message received through a call establishment request interface in the third-party call interface.

9. The system of claim 7 or 8, wherein,
the resource type is used to indicate to take the multimedia content indicated by the resource address as a ring tone to play to the calling party, or as a ring tone to play to the called party; the resource address is used to indicate an address of the multimedia content.

10. A PARLAY X gateway for implementing an enhanced call, comprising a call control module, wherein
the call control module is set to: in a process of the PARLAY X gateway establishing a call, acquire a resource type and a resource address of the call through a call interface, determine to play multimedia content indicated by the resource address to a calling party or a called party according to the resource type.

11. The PARLAY X gateway of claim 10, wherein,
the call control module is set to acquire the resource type and resource address of the call through a call interface by a following way: when the call interface is a Call Notification interface of the PARLAY X gateway, parsing the resource type and resource address out from control call response message received from the call notification interface, the resource type and resource address are parameters in an action structure in the call response message.

12. The PARLAY X gateway of claim 10, wherein,
the call control module is set to acquire the resource type and resource address of the call through a call interface by a following way: when the call interface is a Third Party Call interface of the PARLAY X gateway, parsing the resource type and resource address out from call establishment request message received through a call establishment request interface in the third-party call interface.

13. The PARLAY X gateway of claim 10,11 or 12, wherein,
the resource type is used to indicate to take the multimedia content indicated by the resource address as a ring tone to play to the calling party, or as a ring tone to play to the called party; the resource address is used to indicate an address of the multimedia content.
